# EUROPÄISCHE PATENTSCHRIFT

(11) **EP 0 610 539 B1**
(45) Veröffentlichungstag und Bekanntmachung des Hinweises auf die Patenterteilung: **07.05.1997**
(21) Anmeldenummer: 93102254.5
(22) Anmeldetag: 12.02.1993
(51) Int. Cl.: H02M 3/335

(54) **Umrichter mit einer vom Eingang und einem Rückspeisekreis gespeisten Steuerschaltung**
Converter with a control circuit fed from the input and from a feed-back loop
Convertisseur avec un circuit de contrôle que est alimenté de l'entrée et d'une boucle de rétro-action

(43) Veröffentlichungstag der Anmeldung: 17.08.1994
(73) Patentinhaber: SIEMENS AKTIENGESELLSCHAFT, 80333 München (DE)
(72) Erfinder: Stolz, Gerhard, Dipl.-Ing. (FH), W-8038 Gröbenzell (DE)

(56) Entgegenhaltungen:
- ELEKTRONIK, Bd. 39, Nr. 9, 27. April 1990, München DE, Seiten 134-140; W. BLAESNER : 'Erhöhte Betriebssicherheit und niedrigere Kosten'

## Beschreibung

Die Erfindung bezieht sich auf einen wie im Oberbegriff des Patentanspruchs 1 angegebenen Umrichter mit einer vom Eingang und einem Rückspeisekreis gespeisten Steuerschaltung.

Ein derartiger Umrichter ist bereits aus der DEZ Elektronik 16/5.8.1988, Seite 44 bis 48, insbesondere Seite 48, Bild 9 und aus der DEZ Elektronik 39(1990) S 134-140 bekannt. Der bekannte Schaltregler enthält eine Bootstrap-Schaltung, die den Wirkungsgrad verbessert, wenn der Schaltregler mit einer vergleichsweise hohen Eingangsspannung arbeitet. Während der Aufladung eines Softstart-Kondensators ist der Speiseeingang der Steuerschaltung über einen leitend gesteuerten Transistor an die Eingangsspannung gelegt. Erreicht der Softstart-Kondensator eine vorgegebene Schwelle, so wird der Transistor gesperrt. Der Betriebsstrom der Steuerschaltung wird dann von einer zusätzlichen Bootstrap-Wicklung des Übertragers erzeugt.

Bei Gleichstrom-Umrichtern mit galvanischer Trennung zwischen Ein- und Ausgang werden vergleichsweise hohe Anforderungen bezüglich des Wirkungsgrades sowie der Konstanz der Ausgangsspannung zweckmäßigerweise durch eine direkte Regelung der Ausgangsspannung erfüllt. Die sekundärseitig angeordnete Reglerschaltung beeinflußt dabei das Tastverhältnis von Einschaltimpulsen, mit deren Hilfe ein im primärseitigen Hauptstromkreis angeordneter elektronischer Schalter im Sinne einer konstanten Ausgangsspannung gesteuert wird. Die Steuerschaltung, die die Einschaltimpulse erzeugt, wird zur Verbesserung des Wirkungsgrades nach der Anlaufphase im Normalbetrieb aus einer Rückspeisewicklung des Transformators oder bei Durchflußumrichtern alternativ aus der dazugehörigen Speicherdrossel versorgt. Bei Ausfall der Reglerschaltung oder des dazugehörigen Übertragungsweges kann die Ausgangsspannung und die Rückspeisespannung unzulässig hohe Werte erreichen und den angeschlossenen Verbraucher und/oder die eigene Steuerschaltung zerstören.

Man kann zur Vermeidung unzulässig großer Ausgangs- bzw. Rückspeisespannungen eine Überwachungsschaltung vorsehen, die mit Hilfe einer eigenen Referenzspannung die Ausgangsspannung überwacht und im Fehlerfall die zu hohe Ausgangsspannung erkennt und über einen Optokoppler und eine primärseitige Halteschaltung den Umrichter abschaltet. Auf diese Weise kann man den Verbraucher bzw. die Steuerschaltung vor einer Beschädigung oder Zerstörung schützen. Die genannten Maßnahmen sind jedoch mit einem vergleichsweise großen Aufwand verbunden.

Aufgabe der Erfindung ist es, bei einem Umrichter der eingangs genannten Art sicherzustellen, daß bei einem Ausfall der Anordnung zur Regelung oder einer Unterbrechung im dazugehörigen Übertragungsweg die Ausgangsspannung bzw. Ausgangsspannungen und die Rückspeisespannung mit möglichst geringem Aufwand begrenzt werden.

Gemäß der Erfindung wird der Umrichter zur Lösung der genannten Aufgabe in der im kennzeichnenden Teil des Patentanspruchs 1 angegebenen Weise ausgebildet.

Durch die erfindungsgemäßen Maßnahmen ergibt sich der Vorteil, daß sich die gewünschte Begrenzung der Spannungen für Anwendungen des Umrichters, bei denen für die Ausgangsspannung bzw. Ausgangsspannungen keine besonders engen Grenzen für eventuell auftretende Überspannungen gesetzt sind, die Begrenzung mit besonders geringem Aufwand an zusätzlichen Bauteilen erreichen läßt.

Vorteilhafte Ausgestaltungen der Erfindung gehen aus den Ansprüchen 2 bis 7 hervor.

Die Erfindung wird anhand der in den Figuren 1 und 2 gezeigten Ausführungsbeispiele sowie anhand der in Fig. 3 gezeigten Ausgangskennlinien näher erläutert.

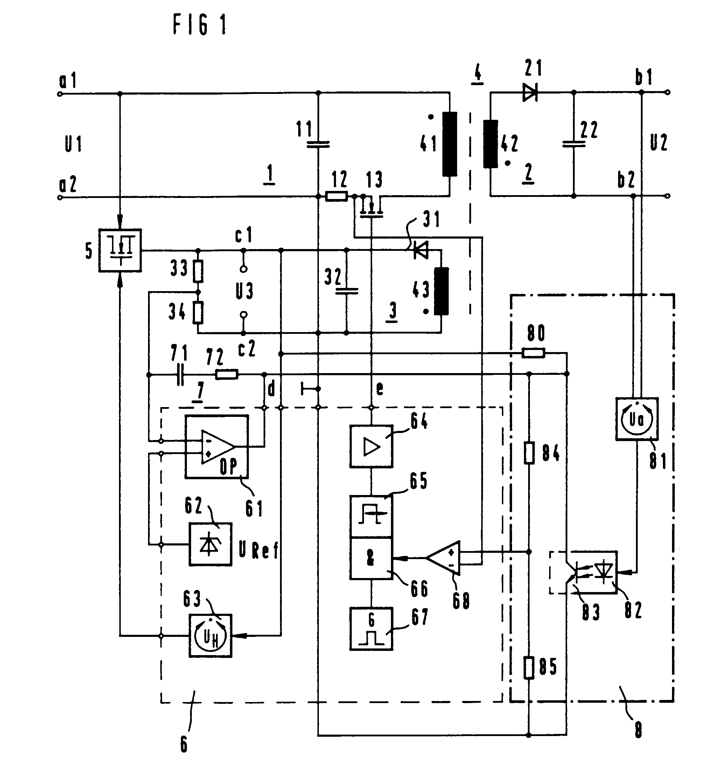

Es zeigen
- Fig. 1: einen Sperrumrichter mit Spannungsgegelung mit unterlagerter Stromregelung (Current-Mode-Regelung),

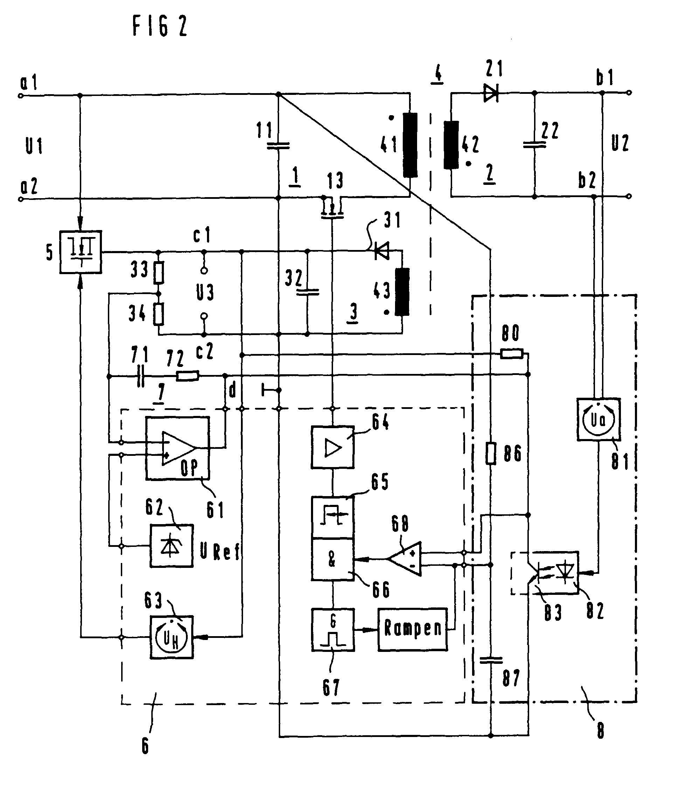

- Fig. 2: einen Umrichter mit unmittelbarer Regelung der Ausgangsspannung und

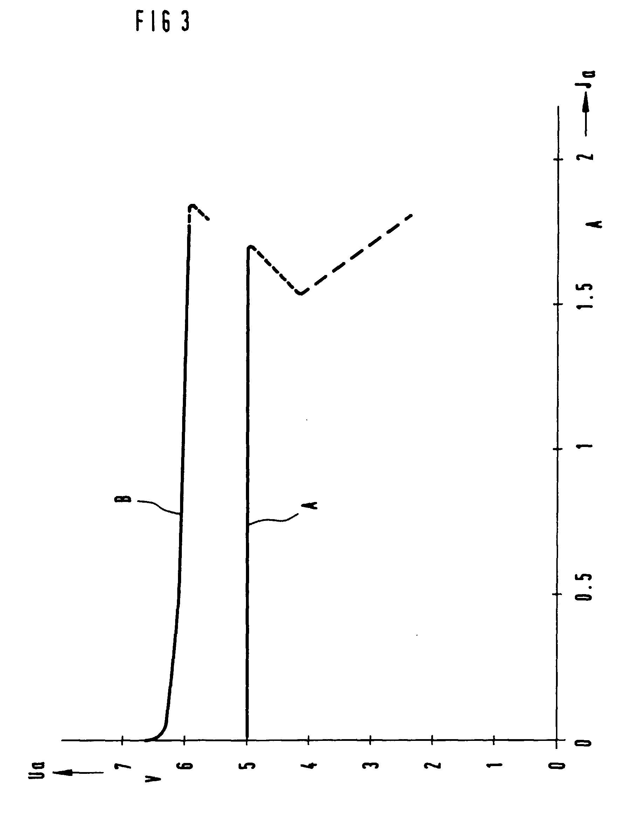

- Fig. 3: Ausgangskennlinien für den Sperrumrichter nach Fig. 1 bzw. 2.

Bei dem in Fig. 1 gezeigten Sperrumrichter liegt am Eingang der Kondensator 11 und am Ausgang der Kondensator 22. Der Kondensator 11 wird aus einer in der Figur nicht dargestellten Gleichspannungsquelle mit der Eingangsspannung U1 gespeist. Am Kondensator 11 liegt die aus der Primärwicklung 41, der Drain-Source-Strecke des Feldeffekttransistors 13 und dem Strommeßwiderstand 12 bestehende Serienschaltung. Anstelle des Feldeffekttransistors 13 kann als Schalttransistor gegebenenfalls ein bipolarer Transistor vorgesehen sein.

Am Ausgang b1, b2 kann ein veränderbarer Lastwiderstand angeschlossen werden. Der Ausgang b1, b2 ist über die Gleichrichterdiode 21 an die Sekundärwicklung 42 des Transformators 4 angeschlossen. Dabei enthält der Sekundärkreis des Gleichstromumrichters - ausgehend von der Sekundärwicklung 42 - in einem Längszweig die Gleichrichterdiode 21 und in einem darauffolgenden Querzweig den Kondensator 22.

Zur Steuerung des Feldeffekttransistors 13 dient die Steuerschaltung 6. Der Feldeffekttransistor 13 ist mit seiner Steuerelektrode an den Steuerausgang e der Steuerschaltung 6 angeschlossen. Der Versorgungsspannungseingang d der Steuerschaltung 6 ist über das Stellglied 5 mit dem Anschluß a1 des Eingangs verbunden. Das Stellglied 5 wird durch den in der Steuerschaltung enthaltenen Regler 63 gesteuert. Der Istwerteingang des Reglers 63 ist an den Speiseeingang d der Steuerschaltung 6 angeschlossen.

Die Rückspeisewicklung 43 des Transformators 4 dient zur Erzeugung einer Rückspeisespannung. Parallel zur Rückspeisewicklung 43 liegt die aus der Gleichrichterdiode 31 und dem Kondensator 32 bestehende Serienschaltung. Am Kondensator 32 liegt der Ausgang c1, c2 für die Rückspeisespannung U3 des Sperrumrichters.

An den Ausgang b1, b2 des Sperrumrichters ist der Regler 81 angeschlossen. Zwischen dem Regler 81 und der Steuerschaltung 6 ist ein Optokoppler angeordnet, dessen Fotodiode 82 an den Regler 81 angeschlossen ist. Der Fototransistor 83 des Optokopplers liegt emitterseitig am Bezugspotential. Der Kollektor des Fototransistors 83 ist über den Widerstand 80 mit dem gegenüber Bezugspotential Spannung führenden Anschluß c1 des Ausgangs für die Rückspeisespannung U3 verbunden. Parallel zur Emitter-Kollektor-Strecke des Fototransistors 83 liegt der aus den Widerständen 84 und 85 bestehende Spannungsteiler. Der Abgriff des Spannungsteilers 84, 85 ist mit dem nichtinvertierenden Eingang des in der Steuerschaltung 6 enthaltenen Komparators 68 verbunden. Der invertierende Eingang des Komparators 68 liegt am Verbindungspunkt von Strommeßwiderstand 12 und Source-Elektrode des Feldeffekttransistors 13. Der Strommeßwiderstand 12 ist auf seiten der Eingangsspannungsquelle a1, a2 mit Bezugspotential verbunden.

Die Steuerschaltung 6 enthält ferner den Taktgeber 67, an dessen Ausgang eine aus der Verknüpfungsanordnung 66 und dem Pulsdauermodulator 65 bestehende Anordnung angeschlossen ist. Diese Anordnung 65, 66 wird durch den Komparator 68 gesteuert. Zwischen dem Ausgang des Pulsdauermodulators 65 und der Gate-Elektrode des Feldeffekttransistors 13 liegt der Treiber 64, der an seinem Ausgang e Einschaltimpulse mit veränderbarem Tastverhältnis an die Gate-Elektrode des Feldeffekttransistors 13 abgibt.

Die Steuerschaltung 6 enthält ferner den Operationsverstärker 61 und die Referenzspannungsquelle 62. Der Ausgang des Operationsverstärkers 61 ist über die aus dem Kondensator 71 und dem Widerstand 72 bestehende Serienschaltung an den invertierenden Eingang des Operationsverstärkers 61 geführt. Der nichtinvertierende Eingang des Operationsverstärkers 61 mit offenem Kollektorausgang ist an die Referenzspannungsquelle 62 angeschlossen. Der invertierende Eingang des Operationsverstärkers 61 liegt am Abgriff des aus den Widerständen 33 und 34 bestehenden, parallel zum Kondensator 32 liegenden Spannungsteilers.

Anstelle des Operationsverstärkers 61 mit offenem Kollektorausgang kann gegebenenfalls ein Operationsverstärker mit Gegentaktausgang Verwendung finden. In diesem Fall ist zwischen dem Ausgang des Operationsverstärkers und dem Verbindungspunkt des Widerstandes 80 mit dem Kollektor des Optokopplers eine Entkopplungsdiode einzufügen.

Der Ausgang des Operationsverstärkers 61 ist mit dem Kollektor des Fototransistors 83 unmittelbar verbunden. Der Ausgang des Operationsverstärkers 61 und der Ausgang des Optokopplers 82, 83 sind daher unmittelbar miteinander verbunden. Diese Verbindung der Ausgänge hat über den Widerstand 80 an den Anschluß c1 für die als Hilfsspannung dienende weitere Ausgangsspannung U3 geführt. Diese Anordnung bildet eine Schaltung nach Art einer Oder-Verknüpfung.

Die Spannung am Spannungsteiler 84, 85 wird bei Normalbetrieb vom Ausgang des Optokopplers 83 und im Fehlerfall vom Ausgang des Operationsverstärkers 61 bestimmt. Die Spannung am Abgriff des Teilers 84, 85 bildet den Sollwert für die unterlagerte Stromregelung.

Bei einem Fehler des Reglers 81 oder des dazugehörigen Übertragungsweges, insbesondere des im Übertragungsweg gelegenen Optokopplers 82, 83, der zur Erhöhung der Ausgangsspannung U2 führt, steigt auch die Rückspeisespannung U3 etwa proportional der Ausgangsspannung U2 an. Die Rückspeisespannung U3 wird über den Spannungsteiler 33, 34 im integrierten Operationsverstärker 61 der Steuerschaltung mit der Referenzspannung U_{Ref} des ebenfalls im Steuerbaustein enthaltenen Referenzspannungsgebers 62 verglichen. Beim Erreichen eines vorgegebenen Spannungswertes löst diese Regelschaltung die defekte Spannungsregelung ab und stellt durch eine EMK-Regelung das Tastverhältnis der Einschaltimpulse so ein, daß sich eine konstante Spannung U3 ergibt. Proportional dazu bleibt die Ausgangsspannung U2 ebenfalls auf einem gegenüber der Regelung durch den Regler 81 etwas erhöhten Wert geregelt bzw. begrenzt.

Das RC-Glied 71, 72 bildet eine Gegenkopplungsschaltung, die dem Regelkreis ein stabiles Verhalten verleiht. Verbraucher und Steuerschaltung des Umrichters sind auf diese Weise durch lediglich vier zusätzliche passive Bauelemente 33, 34, 71, 72 wirksam gegen Überspannungen geschützt.

Der in Fig. 2 gezeigte Sperrumrichter unterscheidet sich von dem nach Fig. 1 dadurch, daß der invertierende Eingang des Komparators 68 nicht an den gegenüber Bezugspotential Spannung führenden Anschluß des Strommeßwiderstandes 12, sondern an eine andere Anordnung angeschlossen ist, die Spannungsimpulse mit jeweils zeitlich ansteigender Amplitude erzeugt. Diese Anordnung enthält die aus dem Widerstand 86 und dem Kondensator 87 bestehende, an die Eingangsspannung U1 angeschlossene Serienschaltung und den Rampengenerator 69. Der invertierende Eingang des Komparators 68 ist an den Verbindungspunkt von Widerstand 86 und Kondensator 87 und damit an den gegenüber Bezugspotential Spannung führenden Anschluß des Kondensators 87 angeschlossen. Am invertierenden Eingang des Komparators 68 liegt ferner der Ausgang des durch den Taktgeber 67 gesteuerten Rampengenerators 69, der den Kondensator 87 periodisch entlädt.

Als Anwendungsbeispiele für die vorgesehene Art der Spannungsbegrenzung sind in den Figuren 1 und 2 Sperrumrichter dargestellt. In entsprechender Weise kann auch bei anderen Gleichstromumrichtern, insbesondere Durchflußumrichtern die Ausgangsspannung begrenzt werden. Als Steuerschaltung dient vorzugsweise ein integrierter Steuerbaustein.

Bei den Umrichtern nach den Figuren 1 und 2 wird das Tastverhältnis der Einschaltimpulse jeweils dadurch verändert, daß Einschaltimpulse vorgegebener Folgefrequenz in Abhängigkeit vom Ansprechen eines Komparators bezüglich ihrer Dauer verkürzt werden. Eine zweckmäßige Abwandlung dieser Regelung kann darin bestehen, daß das Tastverhältnis durch Verändern der Folgefrequenz oder sowohl der Folgefrequenz als auch der Impulsdauer verändert wird. Zur Veränderung der Impulsfolgefrequenz kann ein Oszillator mit spannungsgesteuerter Frequenz Verwendung finden.

Fig. 3 zeigt zwei Ausgangskennlinien eines Sperrumrichters im Vergleich. Die Ausgangskennlinie A gilt für eine geregelte Ausgangsspannung. Die Ausgangskennlinie B zeigt den Spannungsverlauf im Falle einer Begrenzung der Ausgangsspannung durch EMK-Regelung. Die Begrenzung der Ausgangsspannung durch die EMK Regelung setzt bei einem etwas höheren Spannungswert ein als er sich bei der Regelung der Ausgangsspannung ergibt.

## Patentansprüche

1. Umrichter mit einem in Serie zu einer Primärwicklung (41) eines Transformators (4) angeordneten, durch eine Steuerschaltung (6) steuerbaren elektronischen Schalter (13), mit wenigstens einem an eine Ausgangswicklung (42) des Transformators angeschlossenen Sekundärkreis zur Erzeugung einer Ausgangsspannung und mit einer Anordnung (8) zur Regelung der Ausgangsspannung (U2) durch Veränderung des Tastverhältnisses der von der Steuerschaltung (6) an den elektronischen Schalter (13) abgegebenen Einschaltimpulse, wobei ein Speisespannungseingang (d) der Steuerschaltung sowohl an einen Rückspeisekreis (43, 31, 32) des Umrichters als auch über ein Stellglied (5) an den Eingang (al) des Umrichters angeschlossen ist, die Anordnung (8) zur Regelung der Ausgangsspannung einen Regler (81) sowie einem dem Regler nachgeschaltet Opto-Koppler (82, 83) mit offenen Kollektorausgang aufweist und am Ausgang des Rückspeisekreises (43, 31, 32) ein Spannungsteiler (33, 34) parallelgeschaltet ist,
**dadurch gekennzeichnet**,
daß in der Steuerschaltung (6) ein Operationsverstärker (61) zur Spannungsbegrenzung im Fehlerfall vorgesehen ist, wobei zwischen dem Ausgang und dem invertierenden Eingang des Operationsverstärkers (61) ein RC-Glied (71, 72) vorgesehen ist, daß der invertierende Eingang mit dem Mittenabgriff des Spannungsteilers (33, 34) verbunden ist,
daß der Ausgang des Operationsverstärkers (61) sowohl mit der Emitter-Kollektor-Strecke (83) des Optokopplers und mit dem nicht invertierenden Eingang eines in der Steuerschaltung integrierten Komperators (68) verbunden ist und
daß der invertierende Eingang des Komparators (68) mit einem Spannungspfad auf der Primärseite (41) des Übertragers (4) verbunden ist.

2. Umrichter nach Anspruch 1,
**dadurch gekennzeichnet**,
daß der nichtinvertierende Eingang des Operationsverstärkers (61) in der Steuerschaltung (6) mit einer Referenzspannungsquelle (62) verbunden ist und daß der Ausgang des Operationsverstärkers (61) mit dem Ausgang des Optokopplers (82, 83) über einen gemeinsamen Widerstand (80) an die Rückspeisespannung (U3) geführt ist.

3. Umrichter nach einem der vorhergehenden Ansprüche
**dadurch gekennzeichnet**,
daß an einem Eingang des Komparators (68) Spannungsimpulse mit jeweils zeitlich ansteigender Amplitude zuführbar sind, anderer Eingang am Ausgang der Schaltungsanordnung (8) zur Regelung der Ausgangsspannung (U2) liegt und mit dessen Hilfe die von einem Taktgeber (67) erzeugten Einschaltimpulse zeitlich verkürzbar sind.

4. Umrichter nach Anspruch 3,
**dadurch gekennzeichnet**,
daß der eine Eingang des Komparator (68) an einen im Primärkreis (1) des Umrichters angeordneten Strommeßwiderstand (12) angeschlossen ist.

5. Umrichter nach Anspruch 4,
**dadurch gekennzeichnet**,
daß der eine Eingang des Komparators (68) an den Ausgang eines Rampengenerators (69) angeschlossen ist.

6. Umrichter nach einem der vorhergehenden Ansprüche,
**dadurch gekennzeichnet**,
daß zwischen dem Ausgang des Optokopplers (82, 83) und einem Bezugspotential ein Spannungsteiler (84, 85) angeordnet ist und daß der andere Eingang des Komparators (68) an den Abgriff des Spannungsteilers (84, 85) angeschlossen ist.

## Claims

1. Converter having an electronic switch (13) which is arranged in series with a primary winding (41) of a transformer (4) and can be controlled by a control circuit (6), having at least one secondary circuit, which is connected to an output winding (42) of the transformer, for producing an output voltage, and having an arrangement (8) for regulating the output voltage (U2) by varying the duty ratio of the switch-on pulses which are emitted from the control circuit (6) to the electronic switch (13), a supply voltage input (d) of the control circuit being connected both to a feedback circuit (43, 31, 32) of the converter and, via a control element (5), to the input (al) of the converter, the arrangement (8) for regulating the output voltage having a regulator (81) as well as an optocoupler (82, 83) which is connected downstream of the regulator and has an open collector output, and a voltage divider (33, 34) being connected in parallel at the output of the feedback circuit (43, 31, 32), characterized in that an operational amplifier (61) is provided in the control circuit (6) for voltage limiting in the event of a fault, an RC element (71, 72) being provided between the output and the inverting input of the operational amplifier (61), in that the inverting input is connected to the centre tap of the voltage divider (33, 34), in that the output of the operational amplifier (61) is connected both to the emitter-collector path (83) of the optocoupler and to the non-inverting input of a comparator (68) which is integrated in the control circuit, and in that the inverting input of the comparator (68) is connected to a voltage path on the primary side (41) of the transformer (4).

2. Converter according to Claim 1, characterized in that the non-inverting input of the operational amplifier (61) in the control circuit (6) is connected to a reference voltage source (62), and in that the output of the operational amplifier (61) is passed, with the output of the optocoupler (82, 83), via a common resistor (80) to the feedback voltage (U3).

3. Converter according to one of the preceding claims, characterized in that voltage pulses each having an amplitude which rises with time can be supplied to one input of the comparator (68), another input is connected to the output of the circuit arrangement (8) for regulating the output voltage (U2), and the switch-on pulses which are produced by a clock (67) can be shortened in time with the aid of said other input.

4. Converter according to Claim 3, characterized in that one input of the comparator (68) is connected to a current measuring resistor (12) which is arranged in the primary circuit (1) of the converter.

5. Converter according to Claim 4, characterized in that one input of the comparator (68) is connected to the output of a ramp generator (69).

6. Converter according to one of the preceding claims, characterized in that a voltage divider (84, 85) is arranged between the output of the optocoupler (82, 83) and a reference-earth potential, and in that the other input of the comparator (68) is connected to the tap of the voltage divider (84, 85).

## Revendications

1. Convertisseur statique de fréquence comportant un interrupteur (13) électronique, disposé en série avec un enroulement primaire (41) d'un transformateur (4) et pouvant être commandé par un circuit (6) de commande, au moins un circuit secondaire connecté à un enroulement (42) de sortie du transformateur et destiné à produire une tension de sortie, et un dispositif (8) de régulation de la tension (U2) de sortie par changement du taux d'impulsion des impulsions de branchement fournies par le circuit (6) de commande à l'interrupteur électronique (13), une entrée (d) de tension d'alimentation du circuit de commande étant connectée à la fois à un circuit (43,31,32) d'alimentation en retour du convertisseur statique de fréquence et, par l'intermédiaire d'un organe (5) de réglage, à l'entrée (a1) du convertisseur statique de fréquence, le dispositif (8) de réglage de la tension de sortie comportant un régulateur (81) ainsi qu'un optocoupleur (82,83) branché en aval du régulateur et à sortie à collecteur ouvert et un diviseur (33,34) de tension étant branché en parallèle avec la sortie du circuit (43,31,32) d'alimentation en retour,
caractérisé en ce que
il est prévu dans le circuit (6) de commande un amplificateur opérationnel (61) de limitation de la tension en cas d'erreur, un circuit RC (71,72) étant prévu entre la sortie et l'entrée inverseuse de l'amplificateur opérationnel (61),
l'entrée inverseuse est reliée à la prise médiane du diviseur (33,34) de tension,
la sortie de l'amplificateur opérationnel (61) est reliée à la fois à la voie émetteur-collecteur (83) de l'optocoupleur et à l'entrée non inverseuse d'un comparateur (68) intégré au circuit de commande et
l'entrée inverseuse du comparateur (68) est reliée à une voie de tension du côté primaire (41) du transformateur (4).

2. Convertisseur statique de fréquence suivant la revendication 1,
caractérisé en ce que
l'entrée non inverseuse de l'amplificateur (61) opérationnel est reliée dans le circuit (6) de commande à une source (62) de tension de référence et la sortie de l'amplificateur opérationnel (61) est reliée conjointement avec la sortie de l'optocoupleur (82,83) par l'intermédiaire d'une résistance commune (80) à la tension (U3) d'alimentation en retour.

3. Convertisseur statique de fréquence suivant l'une des revendications précédentes,
caractérisé en ce que
des impulsions de tension d'amplitude croissante en fonction du temps peuvent être appliquées à une entrée du comparateur (68), dont l'autre entrée est reliée à la sortie du montage (8) de régulation de la tension (U2) de sortie et à l'aide duquel les impulsions de branchement produites par une horloge (67) peuvent être écourtées dans le temps.

4. Convertisseur statique de fréquence suivant la revendication 3,
caractérisé en ce que
l'une des entrées du comparateur (68) est connectée à une résistance (12) de mesure du courant disposée dans le circuit primaire (1) du convertisseur statique de fréquence.

5. Convertisseur statique de fréquence suivant la revendication 4,
caractérisé en ce que
l'une des entrées du comparateur (68) est connectée à la sortie d'un générateur de rampes (69).

6. Convertisseur statique de fréquence suivant l'une des revendications précédentes,
caractérisé en ce que
un diviseur (84,85) de tension est disposé entre la sortie de l'optocoupleur (82,83) et un potentiel de référence et l'autre entrée du comparateur (68) est connectée à la prise du diviseur (84,85) de tension.
